# EUROPÄISCHE PATENTANMELDUNG

(11) **EP 0 527 474 A1**
(43) Veröffentlichungstag der Anmeldung: **17.02.1993**
(21) Anmeldenummer: 92113688.3
(22) Anmeldetag: 11.08.1992
(51) Int. Cl.: B60P 3/12, B60P 3/07, B60P 1/00

(54) **Lastkraftfahrzeug, insbesondere Bergefahrzeug**

(30) Priorität: 13.08.1991 DE 9110005 U
(71) Anmelder: Fischler, Andreas, D-71560 Sulzbach (DE)
(72) Erfinder: Fischler, Andreas, D-71560 Sulzbach (DE)
(74) Vertreter: Fincke, Karl Theodor, Dipl.-Phys. Dr.

(57) **Zusammenfassung**

Lastkraftfahrzeug, insbesondere Bergefahrzeug, mit einem Schwenkrahmen, an dem beidseitig freifliegend Tragrollen für eine Ladepritsche gelagert sind,
**dadurch gekennzeichnet,**
daß an der Unterseite der Ladepritsche die Tragrollen umgreifende C-Schienen angebracht - vorzugsweise angeschweißt - sind.

## Beschreibung

Die Erfindung betrifft ein Lastkraftfahrzeug, insbesondere Bergefahrzeug, mit einem Schwenkrahmen, an dem beidseitig freifliegend Tragrollen für eine Ladepritsche gelagert sind.

Aufgabe der Erfindung ist es, ein Lastkraftfahrzeug dieser Art anzugeben, bei dem die Ladepritsche präzise und leichtgängig gelagert ist, bei dem auf die Ladepritsche beim Beladen Querkräfte ausgeübt werden können, was insbesondere wichtig ist, wenn zur Ladepritsche mit einem schräg verlaufenden Seil ein Fahrzeug zum Bergen hergeholt werden muß, und bei dem die Ladepritsche verhältnismäßig tief gelagert werden kann.

Die Lösung dieser Aufgabe ist im Kennzeichen des Anspruchs 1 angegeben.

Ein besonderer Vorteil ist noch, daß die C-Schienen, auch wenn auf sie hohe Seitenkräfte ausgeübt werden, nicht zum Aufbiegen neigen.

Um Seitenkräfte ohne seitliche Verschiebung der Ladepritsche in bezug zum Schwenkrahmen aufnehmen zu können und um eine besonders präzise und leichtgängige Führung der Ladepritsche zu erhalten, ist bevorzugt vorgesehen, daß die Tragrollen und die C-Schienen miteinander zusammenwirkende äußere, sich nach außen konisch verjüngende Abschnitte aufweisen.

Um Raum für Befestigungselemente der Tragrollen zu schaffen, ist bevorzugt vorgesehen, daß die zur Seite weisenden Böden der C-Schienen im Querschnitt spitzdachförmig sind.

Da auf die von dem Schwenkrahmen teilweise abgerollte Ladepritsche ein hohes Drehmoment wirkt, das von den Tragrollen aufgenommen werden muß, ist bevorzugt vorgesehen, daß der Abstand benachbarter Tragrollen im hinteren Bereich des Schwenkrahmens kleiner ist als im - anzuhebenden - vorderen Bereich des Schwenkrahmens.

Die Erfindung wird im folgenden an einem Ausführungsbeispiel unter Hinweis auf die beigefügten Zeichnungen beschrieben.

Fig. 1 zeigt in Seitenansicht ein Bergefahrzeug mit abgesenktem Schwenkrahmen und darauf befindlicher Ladepritsche.

Fig. 2 zeigt in Seitenansicht das Bergefahrzeug nach Fig. 1 bei angehobenem Schwenkrahmen und abgerollter Ladepritsche.

Fig. 3 zeigt im Querschnitt die Lagerung der Ladepritsche auf dem Schwenkrahmen im Bereich einer Tragrolle.

Fig. 4 zeigt eine Explosionsdarstellung von wesentlichen Teilen des Schwenkrahmens der Ladepritsche und eines Hilfsrahmens am Bergefahrzeug mit zugehörigen hydraulischen Zylindern.

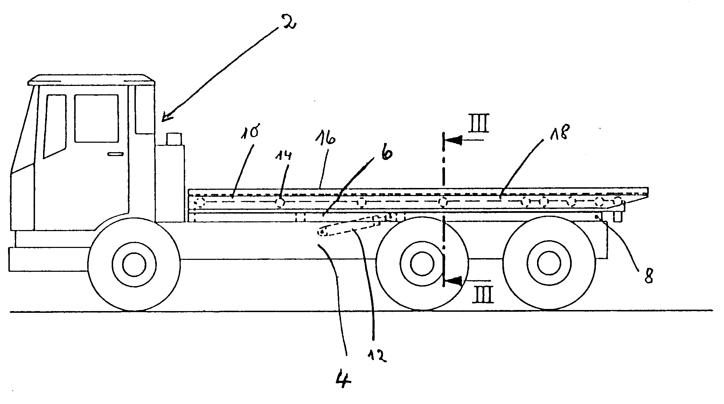

Das Bergefahrzeug 2 weist ein Fahrgestell 4 mit einem Hilfsrahmen 6 auf, an dessen rückwärtigem Ende mittels einer Gelenkanordnung 8 ein Schwenkrahmen 10 angelenkt ist. Mittels eines Kolben-Zylinder-Aggregats 12 ist dieser Schwenkrahmen 10 zu verschwenken. An dem Schwenkrahmen 10 sind beidseitig auf in dem Schwenkrahmen 10 eingeschweißten freifliegenden Achsen 13 Tragrollen 14 für eine Ladepritsche 16 gelagert. An der Unterseite der Ladepritsche 16 sind die Tragrollen 14 ungreifende C-Schienen 18 angeschweißt. Die Tragrollen 14 und die C-Schienen 18 weisen miteinander zusammenwirkende äußere, sich nach außen konisch verjüngende Abschnitte 20, 22 auf. Die zur Seite weisenden Böden 24 der C-Schienen 18 sind im Querschnitt spitzdachförmig, so daß Raum für Sprengringbefestigungen 26 der Tragrollen 14 auf den Achsen 13 verbleibt.

Der Abstand benachbarter Tragrollen 14 im hinteren Bereich des Schwenkrahmens 10 ist kleiner als der Abstand benachbarter Tragrollen 14 im - anzuhebenden - vorderen Bereich des Schwenkrahmens 10. Zum Verschieben der Ladepritsche 16 relativ zu dem Schwenkrahmen 10 dient ein Kolben-Zylinder-Aggregat 28.

## Patentansprüche

1. Lastkraftfahrzeug, insbesondere Bergefahrzeug (2), mit einem Schwenkrahmen (10), an dem beidseitig freifliegend Tragrollen (14) für eine Ladepritsche (16) gelagert sind,
**dadurch gekennzeichnet,**
daß an der Unterseite der Ladepritsche (16) die Tragrollen umgreifende C-Schienen (18) angebracht - vorzugsweise angeschweißt - sind.

2. Lastkraftfahrzeug nach Anspruch 1, dadurch gekennzeichnet, daß die Trarollen (14) und die C-Schienen (18) miteinander zusammenwirkende äußere, sich nach außen konisch verjüngende Abschnitte (20, 22) aufweisen.

3. Lastkraftfahrzeug nach Anspruch 1, dadurch gekennzeichnet, daß die zur Seite weisenden Böden (24) der C-Schienen (18) im Querschnitt spitzdachförmig sind.

4. Lastkraftfahrzeug nach einem der vorstehenden Ansprüche, dadurch gekennzeichnet, daß der Abstand benachbarter Tragrollen (14) im hinteren Bereich des Schwenkrahmens (10) kleiner ist als im - anzuhebenden - vorderen Bereich des Schwenkrahmens (10).
